Europäisches Patentamt

(19) European Patent Office

Office européen des brevets

(11) Publication number: **0 305 544 B1**

(12) **EUROPEAN PATENT SPECIFICATION**

(45) Date of publication of patent specification :
03.07.91 Bulletin 91/27

(51) Int. Cl.⁵ : **B05D 1/20**

(21) Application number : **88902556.5**

(22) Date of filing : **16.03.88**

(86) International application number :
**PCT/JP88/00272**

(87) International publication number :
**WO 88/06926 22.09.88 Gazette 88/21**

(54) **FORMATION OF MONOMOLECULAR FILM AND APPARATUS FOR LAMINATING SAID FILMS.**

(30) Priority : 16.03.87 JP 61640/87

(43) Date of publication of application :
08.03.89 Bulletin 89/10

(45) Publication of the grant of the patent :
03.07.91 Bulletin 91/27

(84) Designated Contracting States :
DE FR GB

(56) References cited :
EP-A- 0 182 582
JP-A-62 274 732
JP-A-62 286 576
JP-A-62 294 434

(73) Proprietor : SHINGIJYUTSU KAIHATSU
JIGYOUDAN
5-2, Nagatacho 2-chome
Chiyoda-ku Tokyo 100 (JP)

(72) Inventor : MIYATA, Seizou
18-26, Shimohouya 3-chome
Houya-shi Tokyo 202 (JP)
Inventor : KUMEHARA, Hideo
130, Outsukajima
Fukaya-shi Saitama 366 (JP)

(74) Representative : Boyes, Kenneth Aubrey et al.
Frank B. Dehn & Co. Imperial House 15-19
Kingsway
London WC2B 6UZ (GB)

# Description

The present invention relates to a method of forming a monomolecular film on a liquid surface and an apparatus of overlaying same on a solid state substrate into a single-layered or multilayered film.

A solid state electronic device, whether active or passive, is mainly composed at present of a thin-film electronic material, and in the manufacturing process thereof, the thin-film technology is directed toward further refinement. This permits expectation of the possibility of developing new application of thinner-film technology, and at the same time, the thinner-film technology is actually becoming the key to success for the electronics sector of industry. Under these circumstances, the role played by organic thin-film materials is now only becoming more important and causing rapid progress of development of functional thin-film materials aiming at achieving a higher added value exceeding the limit of inorganic materials. Particular attention is given to the technique for the preparation of a monomolecular single-layered or multilayered film (L-B film) as an organic thin-film technology.

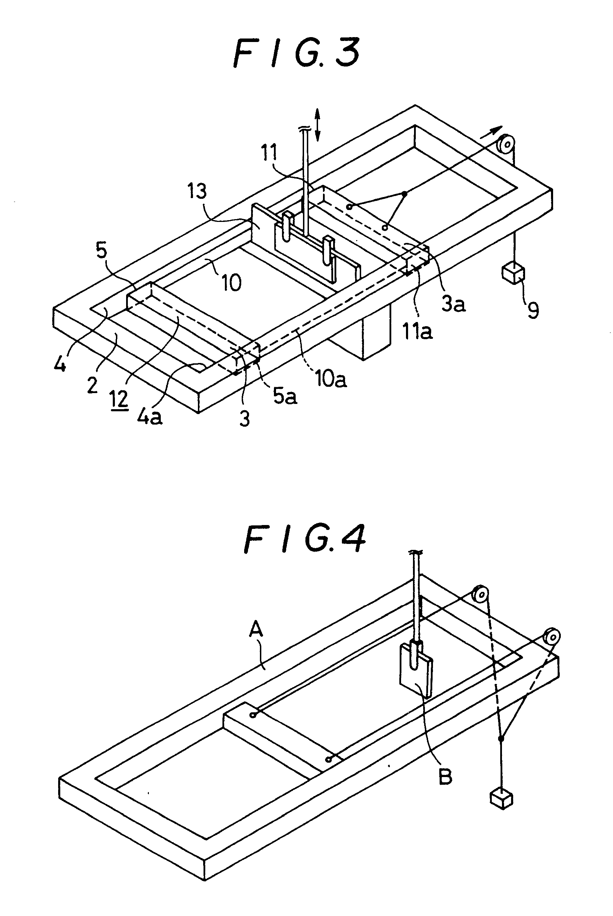

For the formation of an L-B film, the apparatus for preparing an L-B film as shown in Fig. 4, for example, has been employed. However, such a conventional apparatus and the method using such an apparatus have a serious defect. For example, not only in the well-known horizontal deposition method of L-B film, but also in the vertical dipping method, preparation of a singlelayered film or a multilayered film (L-B film) required formation of a stable solid-state film on a liquid surface from monomolecular film substance, and in addition, fluidity on an appropriate level. When using long-chain fatty acid as a component molecule of an L-B film, overlaying can be easily accomplished if metal ion of the metal salt of that long-chain fatty acid is a binary metal ion, whereas, if it is a triad metal ion, a hard film without fluidity is formed, thus making it extremely difficult to accomplish overlaying on a substrate.

This finding is supported by "I. Languir, et al., J. Am. Chem. Soc., vol. 59 (1936)" and "M. Sugi, Solid-State Physics, vol. 17, No. 12 (1982)."

Study on development and application of L-B films, when using long-chain fatty acid, is therefore limited to those having binary ions, and this forms a hindrance to technical progress of L-B films. In fact, the actual situation is that almost no progress is made in research on L-B films using long-chain fatty acid containing a triad metal ion.

In the conventional L-B film forming apparatus, as shown in Fig. 4, because of the very small width of the solid-state substrate (B) to be vertically immersed relative to the inner wall width of the trough (A), disturbance is caused in the monomolecular film on the liquid surface, and this makes it extremely difficult to form a film in a normal state. Monomolecular film material makes roundabout around the substrate (B), thus producing a non-uniform film flow on the liquid surface. As a result, a hard film cannot follow this flow.

Because of the presence of this flow of the film even when a film had been formed on the substrate, the thus obtained film does not maintain the molecular configuration on the liquid surface as it has been. Even by keeping a prescribed surface pressure on the liquid surface by means of a barrier, factors such as the coupling force between the trough inner walls and the monomolecular film material prevents the surface pressure from remaining uniform, and as shown in Figs. 6(a) and 7(a), the flow of the monomolecular film is in disturbed state.

For these reasons, a film formed on the substrate, if any, is defective in that it is in a disturbed state.

These defects have been reported in "B.R. Malcon, Thin Solid Films, 134 (1985) 201-208," and the present inventor confirmed the fact both in theory and in experiments.

The present invention was made in view of the circumstances as presented above and has an object to provide a method of forming monomolecular film on a liquid surface and an overlaying apparatus thereof for the preparation of a singlelayered or a multilayered film, which eliminate the defects in the conventional method and apparatus of forming an L-B Film, and solve such problems as the film disturbance caused by the coupling force between the monomolecular film and the inner walls, and non-uniformity of a single-layered or multilayered film (L-B film) formed on the substrate caused by the disturbance of the monomolecular film resulting from roundabout of the film material to the back of the substrate picking up the film onto the substrate.

For the purpose of achieving the object as described above, the prevent invention provides a method of forming a monomolecular film on a liquid surface, which, in an apparatus of vertically moving a substrate comprising a movable barrier arranged between opposite inner walls of the trough on the liquid surface in the trough ; an auxiliary movable barrier formed in contact with the liquid surface integrally with said movable barrier on the same level ; and a substrate in slidable contact with a portion near the end of said auxiliary movable barrier in contact with the liquid surface, having a width equal to the length of said movable barier and the width of said auxiliary movable barrier ; comprises the steps of causing a monomolecular film forming material to develop over a liquid surface enclosed by said apparatus, making said movable barrier drivable parallelly to the inner wall of the trough while keeping a constant relative position of the both when compressing the area of said liquid surface with said movable barrier, and moving a prescribed amount of said material in contact with said auxiliary movable barrier. In addition, the present invention provides an overlaying apparatus for overlaying a monomolecular film into a single-layered or multilayered film on a solid-state substrate, which comprises : a movable barrier arranged between opposite inner walls of said trough; a device, making said movable barrier drivable with a constant force, brought into contact with said movable barrier ; an auxiliary movable barrier, in contact with the liquid surface on the same level, formed integrally with said movable barrier, said movable barrier and said auxiliary movable barrier being movable parallelly to the inner walls while keeping a constant relative position of the both ; and a substrate or the like having a width equal to the length of said movable barrier and the width of said auxiliary movable barrier, made vertically slidable relative to the liquid surface near the end of said auxiliary barrier in contact with the liquid surface.

In the present invention, in which a prescribed surface pressure is kept by keeping a constant relative position of the movable barrier and the auxiliary movable barrier through the movable barrier giving a constant surface pressure to the monomolecular film on the liquid surface and the auxiliary movable barrier formed integrally with the movable barrier between the monomolecular film and the trough inner walls, the monomolecular film is brought into contact only with the auxiliary movable barrier formed integrally with the movable barrier. As a result, the film is not in contact with the inner walls of the fixed trough as it was in the conventional apparatus, thus preventing disturbance of the monomolecular film from occurring. Since the substrate has a width equal to the length of the movable barrier and the width of the auxiliary movable barrier, the monomolecular film material makes no roundabout through the ends of the substrate, thus causing no disturbance. This permits transfer with the molecular configuration kept in the uniform state. Consequently, it is possible to form a single-layered or multilayered film (L-B film) with a uniform molecular density on the substrate.

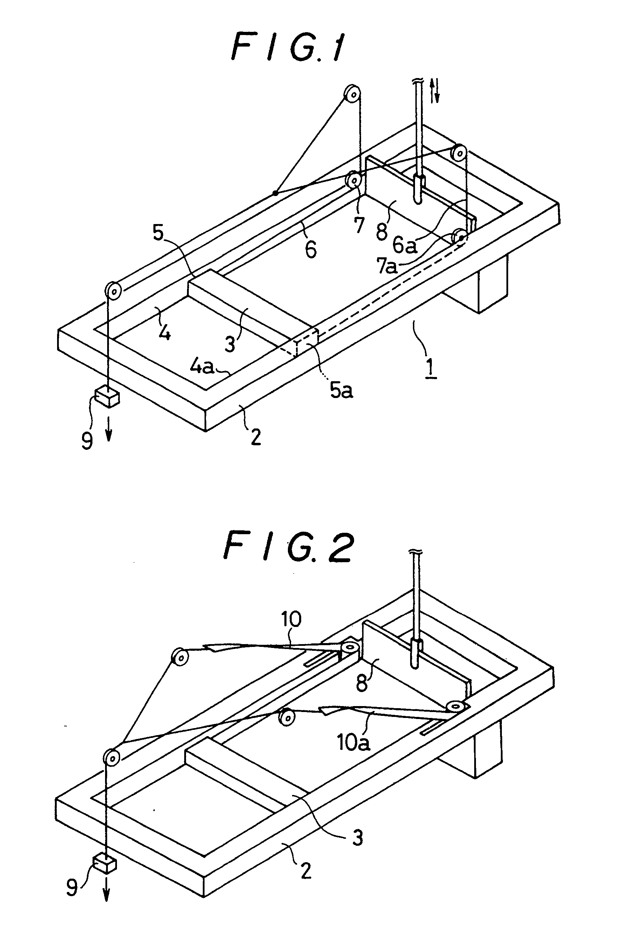

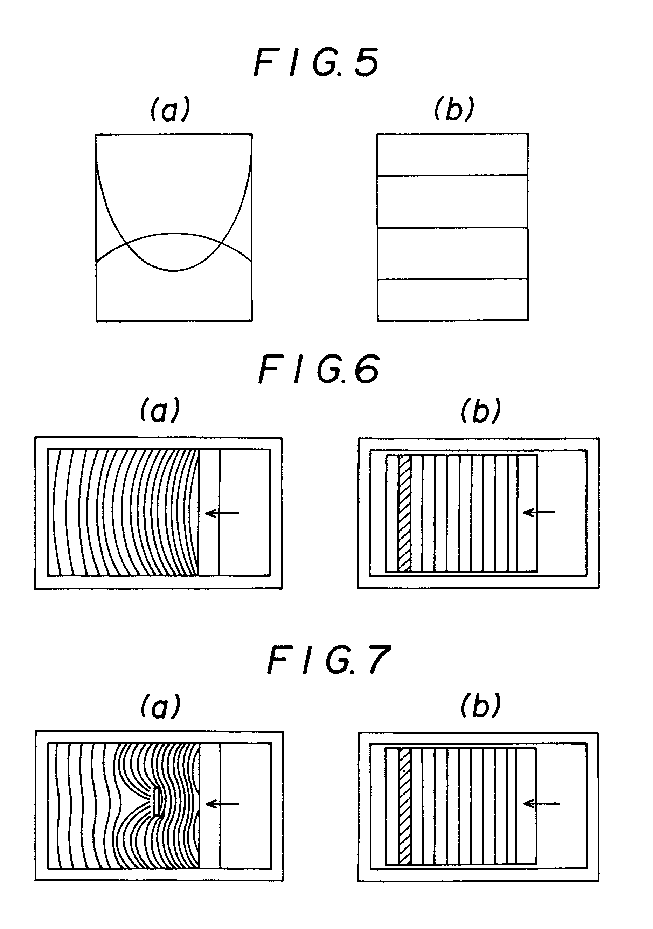

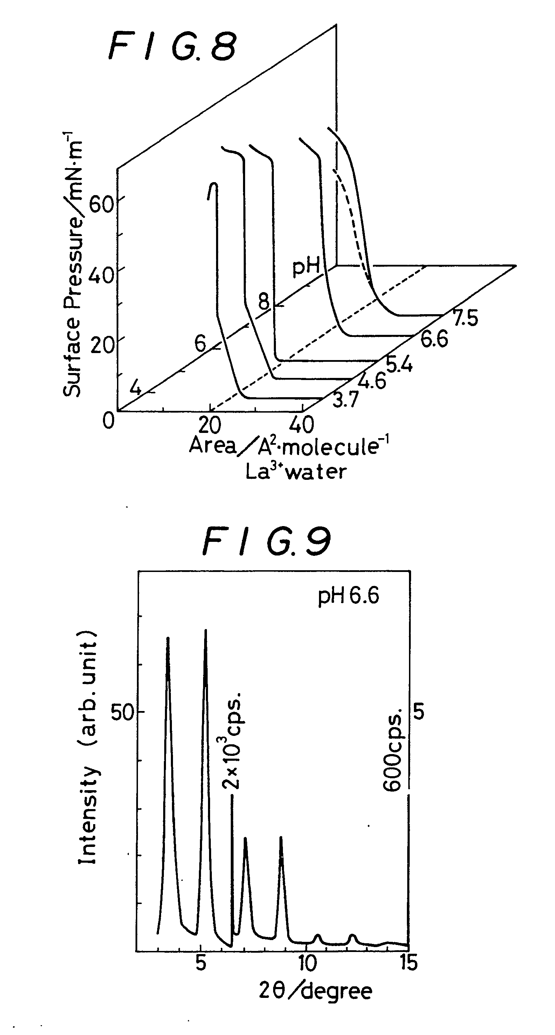

Fig. 1 is a perspective view illustrating an embodiment of the apparatus of overlaying a single-layered or multilayered monomolecular film of the present invention ; Fig. 2 is a perspective view illustrating another embodiment ; Fig. 3 is a perspective view illustrating further another embodiment ; Fig. 4 is a perspective view illustrating an embodiment of the conventional apparatus ; Fig. 5(a) is a schematic view illustrating a non-uniform state of a monomolecular film during overlaying on a substrate in the conventional apparatus ; Fig. 5(b) is a schematic view illustrating a uniform state of a monomolecular film during overlaying on a substrate in the apparatus of the present invention ; Fig. 6(a) is a schematic view illustrating disturbance of the monomolecular film under a prescribed surface pressure in the conventional apparatus ; Fig. 6(b) is a schematic view illustrating a uniform state of a monomolecular film under a prescribed surface pressure in the apparatus of the present invention ; Fig. 7(a) is a schematic view illustrating disturbance of a film on the liquid surface during vertical immersion of the substrate in the conventional apparatus ; Fig. 7(b) is a schematic view illustrating a uniform state of a film on the liquid surface during vertical immersion of the substrate in the apparatus of the present invention, where the portion with oblique lines represents the vertically moving substrate ; Fig. 8 is a graph illustrating typical results of measurement of II-A curve for a film containing triad metal ion which has conventionally been difficult to measure ; and Fig. 9 is an X-ray diffraction spectrum of an overlayed film of triad metal ion which has conventionally been difficult to form into a film.

Now, an embodiment of the present invention is described with reference to the drawings.

In the apparatus shown in Fig. 1, 1 is the main body of the overlaying apparatus of a monomolecular single-layered or multilayered film, formed into a rectangular shape. Pure water or the like with a pH properly adjusted to about 4.5 to 7.5 is stored in a trough (2) giving an appropriate depth to the main body (1) to facilitate overlaying of a monomolecular film. A movable barier (3) appropriately smaller in length than the transverse width of the trough (2) (preferably equal to the width of the solid-state substrate or the substrate holder) is provided on the liquid surface drivable in the longitudinal direction of said trough (2).

String-shaped auxiliary movable barriers (6) and (6a) made of an appropriate material are connected to the ends (5) and (5a) in the longitudinal direction of the movable barrier (3). Said auxiliary movable barriers (6) and (6a) are extended on the same level as the water surface and are caused to slide via pulleys (7) and (7a) arranged at appropriate positions in the trough (2). A substrate (8) (fixed barrier) formed to a width equal to the length of the movable barrier (3) and the width of the auxiliary movable barriers (6) and (6a) is vertically movably provided immediately following said pulleys (7) and (7a). The surface pressure on the water surface enclosed by the movable barrier (3), the auxiliary movable bariers (6) and (6a) and the substrate (8) is adjusted by means of a weight (9) or the like.

By using such an apparatus as described above, it is possible to form a monomolecular film and overlay a multilayered film thereof from triad metal salt stearic acid as shown in Figs. 5(b), 6(b), 8 and 9.

Now, the present invention is described with reference to Figs. 2 and 3.

As shown in Fig. 2, auxiliary movable barriers(10) and (10a) comprising tephron ribbons or the like having an appropriate width may be used in place of the string-shaped auxiliary movable barriers (6) and (6a) comprising silk threads or the like. This further faciliates adjustment of the water level.

It is also possible to arrange the movable barriers (3) and (3a) between the inner walls (4) and (4a) of said trough (2), connect movable barriers (10) and (10a) such as tephron ribbons to the both ends (5), (5a), (11) and (11a) of said movable barriers (3) and (3a), and thus form an integral sliding body (12). A substrate holder (13) (fixed barrier) made drivable in the longitudinal direction of the trough (2) and having a width substantially equal to that of the transverse width of the sliding body (12) may be arranged at an appropriate position within said sliding body (12).

It is needless to mention that this embodiment is only an example and the present invention is not limited to this embodiment : for example, the weight (9) may be replaced by an equipment having an appropriate driving mechanism of sliding body for producing a certain force, or a prescribed surface pressure may be applied to the monomolecular film on the water surface by altering the relative positions of the trough (2) and the movable barriers (3) and (3a) with the sliding body (12).

The function of the present invention is now described in the following paragraph.

In the present invention, the monomolecular film is never in contact with the inner walls (4) and (4a), since a prescribed surface pressure is maintained, through the sliding body (12) composed of the movable barriers (3) and (3a) which keep a prescribed surface presure of the monomolecular film on the liquid surface and auxiliary movable barriers (6) and (6a) or (10) and (10a) formed integrally with the movable barriers(3) and (3a) between the monomolecular film and the inner walls(4) and (4a), by causing transfer with a constant positional relationship with the sliding body(12) composed of the movable barriers (3) and (3a) and the auxiliary movable barriers (6) and (6a) or (10) and (10a), thus preventing disturbance caused by sliding contact from occurring. The monomolecular film material never makes roundabout through the ends of the substrate(8), since the substrate(8) has a width equal to the length of the movable barriers (3) and (3a) and the width of the auxiliary movable barriers (6) and (6a). As a result, no flow is caused in the monomolecular film, with the molecular density kept constant, thus permitting transfer in the state with the monomolecular film configuration kept constant. It is therefore possible to overlay a monomolecular single-layered or multilayered film (L-B film) on the substrate (8).

Because the amount of molecular transfer of the material on the liquid surface is always kept in a constant state at all points on the liquid surface, a monomolecular film of a uniform molecular density can be formed.

As the substrate (8) or the like is made vertically movable relative to the liquid surface, it is possible to keep a constant molecular configuration even with the monomolecular film having a prescribed surface pressure on the liquid surface. As a result, a film can be deposited without fail on the substrate (8) by vertically immersing the substrate (8) relative to the liquid surface. Uniform overlaying on the substrate is possible even for a film conventionaly susceptible to breakage caused by disturbance of the monomolecular film, and for a hard monomolecular film without fluidity which has conventionaly been unable to overlay. Film formation is facilitated over a wide range of film forming conditions (temperature or pH range).

Because of these advantages of the present invention, it is now possible to form a uniform single-layered or multilayered film (L-B film) which so far been unable to practically apply due to non-uniform molecular density and orientation although excellent functions thereof have been reported in experimental studies. In addition, the apparatus of the present invention permits overlaying materials or the like so far unable to overlay on a substrate, thus enabling to achieve remarkable improvement of thin film technology for the formation of a functional thin film such an electronic device, thus providing industrially very useful effects.

## Claims

1. A method of forming a monomolecular film on a liquid surface, which, in an apparatus of vertically moving a substrate comprising a movable barrier arranged between opposite inner walls of the trough on the liquid surface in the trough ; an auxiliary movable barrier in contact with the liquid surface on the same level formed integrally with said movable barrier and a substrate in slidable contact with portion near the end of said auxiliary movable barrier in contact with the liquid surface, having a width equal to the length of said movable barrier and the width of said auxiliary movable barrier ; comprises the steps of causing a monomolecular film forming material to develop over a liquid surface enclosed by said apparatus, making said movable barrier drivable parallelly to the inner wall of the trough while keeping a constant relative position of the both when compressing the area of said liquid surface with said movable barrier, and moving a prescribed amount of said material in contact with said auxiliary movable barrier.

2. An overlaying apparatus of a monomolecular film into a single-layered or multilayered film on a solid-state substrate, which comprises : a movable barrier (3) arranged between opposite inner walls (4) of the trough (2) on the liquid surface in the trough ; a device (9) making said movable barrier (3) drivable with a constant force, brought into contact with said movable barrier ; an auxiliary movable barrier (6, 6a ; 10, 10a), in contact with the liquid surface on the same level, formed integrally with said movable barrier (3), said movable barrier and said auxiliary movable barrier being movable parallely to the inner walls (4) while keeping a constant relative position of the both ; and a substrate (8) or the like having a width equal to the length of said movable barrier and the width of said auxiliary movable barrier, made vertically slidable relative to the liquid surface near the end of said auxiliary barrier in contact with the liquid surface.

## Ansprüche

1. Verfahren zur Herstellung eines monomolekularen Films auf einer flüssigen Oberfläche in einer ein Substrat vertikal bewegenden Vorrichtung mit einer zwischen einander gegenüberliegenden inneren Wänden der Wanne auf der flüssigen Oberfläche in der Wanne angeordneten beweglichen Barriere, einer mit der beweglichen Barriere zusammenhängend bzw. einstückig ausgebildeten beweglichen Hilfsbarriere, die sich auf derselben Höhe in Kontakt mit der flüssigen Oberfläche befindet, und einem Substrat, das sich mit dem in der Nähe des Endes der sich mit der flüssigen Oberfläche in Kontakt befindlichen beweglichen Hilfsbarriere in Gleitkontakt befindet, wobei die Breite des Substrats gleich der Länge der beweglichen Barriere und gleich der Breite der beweglichen Hilfsbarriere entspricht, dadurch gekennzeichnet, daß die Entwicklung eines einen monomolekularen Film bildenden Materials über einer durch die Vorrichtung eingeschlossenen flüssigen Oberfläche bewirkt wird, daß die bewegliche Barriere parallel zur Innenwand der Wanne antreibbar ausgebildet wird, wobei zwischen beiden eine konstante relative Position beibehalten wird, wenn die Fläche bzw. der Bereich der flüssigen Oberfläche mit der beweglichen Barriere komprimiert wird, und daß eine vorgegebene Menge des sich mit der beweglichen Hilfsbarriere in Kontakt befindlichen Materials bewegt wird.

2. Vorrichtung zur Laminierung eines monomolekularen Films zu einem einlagigen oder mehrlagigen Film auf einem in festem Zustand befindlichen Substrat, gekennzeichnet durch eine zwischen einander gegenüberliegenden inneren Wänden (4) der Wanne (2) auf der flüssigen Oberfläche in der Wanne beweglichen Barriere (3), eine mit der beweglichen Barriere in Kontakt gebrachten Einrichtung (9), die für den Antrieb der beweglichen Barriere mit einer konstanten Kraft sorgt, eine mit der flüssigen Oberfläche auf gleicher Höhe in Kontakt befindlichen beweglichen Hilfsbarriere (6, 6a ; 10, 10a), die einstückig mit der beweglichen Barriere (3) ausgebildet ist, wobei die bewegliche Barriere und die bewegliche Hilfsbarriere unter Einhaltung einer konstanten relativen Position zueinander parallel zu den inneren Wänden (4) bewegbar sind, und durch ein Substrat (8) oder dergleichen, dessen Breite gleich der Länge der beweglichen Barriere und gleich der Breite der beweglichen Hilfsbarriere entspricht und das relativ zur flüssigen Oberfläche in der Nähe des Endes der mit der flüssigen Oberfläche in Kontakt befindlichen Hilfsbarriere vertikal verschiebbar ist.

## Revendications

1. Procédé pour former un film monomoléculaire sur la surface d'un liquide dans un appareil dans lequel un substrat est déplacé verticalement, comprenant une barrière mobile disposée entre les parois intérieures opposées du bac et sur la surface du liquide dans le bac, une barrière mobile auxiliaire en contact avec la surface du liquide sur le même niveau faisant corps avec cette barrière mobile et un substrat pouvant glisser en contact avec une partie proche de l'extrémité de cette barrière mobile auxiliaire en contact avec la surface du liquide, ayant une largeur égale à la longueur de cette barrière mobile et à la largeur de cette barrière mobile auxiliaire, caractérisé en ce que l'étalement d'une matière formant un film monomoléculaire est provoqué sur la surface d'un liquide contenu dans cet appareil, que ces barrières mobiles sont entraînées parallèlement à la paroi intérieure du bac avec maintien d'une position relative constante des deux lorsque l'aire de la surface de ce liquide est comprimée avec cette barrière mobile, et qu'une quantité déterminée de cette matière est déplacée en contact avec cette barrière mobile auxiliaire.

2. Appareil pour recouvrir d'un monomoléculaire sous forme d'un film à couche unique ou à plusieurs couches un substrat à l'état solide, caractérisé en ce qu'il comprend une barrière mobile (3) disposée entre les parois intérieures opposées (4) du bac (2) et sur la surface d'un liquide situé dans le bac ; un dispositif (9) permettant d'entraîner cette barrière mobile (3) avec une force constante, en contact avec cette barrière mobile ; une barrière mobile auxiliaire (6, 6a ; 10, 10a) en contact avec la surface du liquide sur le même niveau, faisant corps avec cette barrière mobile (3), cette barrière mobile et cette barrière mobile auxiliaire pouvant être déplacées parallèlement aux parois intérieures (4) avec maintien d'une position relative constante des deux et un substrat (8) ou similaire, ayant une largeur égale à la longueur de cette barrière mobile et à la largeur de cette barrière mobile auxiliaire, pouvant glisser verticalement par rapport à la surface du liquide près de l'extrémité de cette barrière mobile auxiliaire en contact avec la surface du liquide.

# F I G. 1

# F I G. 2

# F I G. 3

# F I G. 4

# F I G. 5

(a)

(b)

# F I G. 6

(a)

(b)

# F I G. 7

(a)

(b)

# F I G. 8

# F I G. 9